# EUROPEAN PATENT APPLICATION

(11) **EP 4 446 111 A1**
(43) Date of publication of application: **16.10.2024**
(21) Application number: 23167303.9
(22) Date of filing: 11.04.2023
(51) Int. Cl.: B32B 27/08, B32B 1/08, B32B 27/28, B32B 27/32, B32B 27/34

(54) **MULTI-LAYER PIPE**

(71) Applicant: Yparex B.V., 7521 BG Enschede (NL)
(72) Inventor: Bijleveld, Erik Cornelis, 7521 BG Enschede (NL); Lenar, Johan Stanislaus Richard, 7521 BG Enschede (NL)
(74) Representative: IPecunia

(57) **Abstract**

A multilayer polymer pipe comprising
- a first tubular layer (1), said first layer comprising as main component one or more polyethylene polymers and which layer further comprises at least one functionalized polyethylene polymer
- a second layer (2) surrounding the first layer, said second layer consisting essentially of one or more polyamide polymers
- a third layer (3) surrounding the second layer, said third layer comprising one or more polyketone polymers
- a fourth layer (4) surrounding the third layer, said fourth layer consisting essentially of one or more polyamide polymers
- a fifth layer (5) surrounding the fourth layer, said fifth layer comprising as main component one or more polyethylene polymers and which further comprises at least one functionalized polyethylene polymer

## Description

### Field of the invention

The present invention relates to multilayer pipes. In particular the invention concerns polymer pipes which show good barrier properties and adhesion. The invention also relates to the use of a pipe according to the invention in an underfloor heating or cooling system.

### Background of the invention

Pipes of thermoplastic materials can be used for conducting liquids, gases and vapours. Such pipes can be single or multilayer pipes. Multi-layer pipes are for example known from EP3763980. That document discloses a multilayer polymer pipe comprising a first weldable tubular layer, forming the core of the pipe, said first layer comprising essentially non-polar polymer material; a second layer surrounding the first layer and a second layer, fitted between the first layer and a third, said second layer being adhered to the first layer and to the third layer so as to interconnect said layers, said third layer comprising essentially polar polymer material, wherein said second layer comprises a polymer material preferably having an adhesion strength to the third layer which is greater than its adhesion strength to the first layer. The first layer may be formed by a thermoplastic polymer or polymer blend, such as polyolefins, poly(acrylonitrile butadiene styrene), thermoplastic elastomers, polyamides and combinations thereof. The second layer may be a monolayer or may comprise several layers. The second layer may comprise a polyolefin, in particular polypropylene. The polyolefin may also contain reactive groups, in particular reactive groups selected from acid, anhydride, ester, epoxy and cyano group and combinations thereof. The third layer comprises ethylene vinyl alcohol (EVOH), polyvinylidene chloride (PVDC), polyamide (PA) and polyketone (PK) or combinations thereof. All examples comprise EVOH as the third layer. However, due to a shortage of EVOH on the world market, there is a need for pipes that comprise little or no EVOH, while still meeting the requirements with respect to barrier properties.

A multilayer pipe has now been developed that has good oxygen barrier properties without using a layer that consists of EVOH. Surprisingly, the adhesion between adjacent layers in the pipe is good, while no functionalized polyethylene has been added to the second layer. The term "Functionalized polyethylene" has been described below.

Thus, the invention relates to a multilayer polymer pipe comprising
- a first tubular layer (1), said first layer comprising as main component one or more polyethylene polymers and which layer further comprises at least one functionalized polyethylene polymer
- a second layer (2) surrounding the first layer, said second layer consisting essentially of one or more polyamide polymers
- a third layer (3) surrounding the second layer, said third layer comprising one or more polyketone polymers
- a fourth layer (4) surrounding the third layer, said fourth layer consisting essentially of one or more polyamide polymers
- a fifth layer (5) surrounding the fourth layer, said fifth layer comprising as main component one or more polyethylene polymers and which further comprises at least one functionalized polyethylene polymer

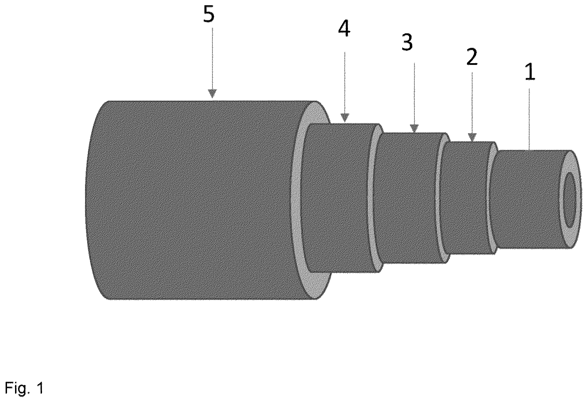

Figure 1 illustrates such a multilayer pipe. In Figure 1,
(1) Is the first layer in the multilayer pipe
(2) Is the second layer in the multilayer pipe
(3) Is the third layer in the multilayer pipe
(4) Is the fourth layer in the multilayer pipe
(5) Is the fifth layer in the multilayer pipe

The multi-layer pipe according to the invention comprises at least five layers, whereby there are no other layers in between the five layers as defined, i.e. the second layer adheres to the first layer, the third layer adheres to the second layer, the fourth layer adheres to the third layer and the fifth layer adheres to the fourth layer. Further layers may be present, e.g. a layer surrounding the fifth layer, and/or a layers surrounded by the first layer.

WO 99/43496 describes a multi-layered structure comprising a first layer comprising a polyolefin or styrenic composition and third layer comprising a polyketone composition, wherein the first and third layer are being bonded together with a second layer of an adhesive composition comprising a graft polymer having a polyolefin or styrenic polymer backbone grafted with at least one polymerizable ethylenically unsaturated carboxylic acid or derivative thereof and a polyamide and optionally a polyolefin. The structure is said to not delaminate after thermoforming it into an article, such as pipes or tubing. The example shows that the adhesion between a first layer of polyethylene and a second layer comprising a 70/30 blend of PA 12 and a polyethylene was not good, while adhesion of a first layer of polyethylene and a second layer comprising a 70/30 blend of PA 12 grafted with maleic anhydride was good. Thus, the presence of the graft-copolymer in the layer between the polyolefin or styrenic composition in the first layer and the polyketone composition in the third layer was needed to achieve good adhesion.

EP3392035 A describes laminates comprising three layers, (A), (B) and (C), respectively. Layer (A) may be a polyethylene, and layer (B) is an adhesive layer B comprising a composition for adhesion, wherein the composition for adhesion satisfies the following requirements (i) to (iii):
(i) Comprising a polyolefin being a product of reaction between a polyolefin (a) having a group that reacts with a carbodiimide group and a carbodiimide group-containing compound (b)
(ii) Comprising a carbodiimide group in an amount of 0.1 to 50 mmol per 100 g of the composition for adhesion; and
(iii) (iii) having a density of 0.870 to 0.940 g/cm³.
Layer (C) may be a polyketone. The groups that are reactive with a carbodiimide is preferably an unsaturated compound having one or more carboxylic anhydride groups or derivatives thereof, for example maleic anhydride.

Surprisingly, the adhesion between adjacent layers in the multilayer pipe according to the invention is good, while no functionalized polyethylene or other compatibilizer has been added to the layer comprising polyethylene and the layer comprising polyketone.

### Detailed description

The invention relates to a multilayer polymer pipe comprising
- a first tubular layer (1), said first layer comprising as main component one or more polyethylene polymers and which layer further comprises at least one functionalized polyethylene polymer
- a second layer (2) surrounding the first layer, said second layer consisting essentially of one or more polyamide polymers
- a third layer (3) surrounding the second layer, said third layer comprising one or more polyketone polymers
- a fourth layer (4) surrounding the third layer, said fourth layer consisting essentially of one or more polyamide polymers
- a fifth layer (5) surrounding the fourth layer, said fifth layer comprising as main component one or more polyethylene polymers and which further comprises at least one functionalized polyethylene polymer

### The first layer

### Polyethylene

Suitable polymers to be used as main component in the first layer are polyethylene polymers. For example, high-density polyethylene (HDPE), medium-density polyethylene (MDPE), low-density polyethylene (LDPE) as well as crosslinked polyethylene (PEX) may be used. One group of suitable polyethylene polymers are the so-called PE-RT polymers, wherein PE-RT stands for Polyethylene Raised Temperature.

In the framework of this invention, HDPE is defined by a density of greater or equal to 941 kg/m³ (according to ASTM D1505-18 revised in 2018 or ISO 1183-2 revised in 2019). Typically, HDPE has a low degree of branching. The mostly linear molecules pack together well, so intermolecular forces are stronger than in highly branched polymers.

In the framework of this invention, MDPE is defined by a density range of 926-940 kg/m³ (according to ASTM D1505-18 revised in 2018 or ISO 1183-2 revised in 2019).

In the framework of this invention, LDPE is defined by a density range of 910-940 kg/m³ (according to ASTM D1505-18 revised in 2018 or ISO 1183-2 revised in 2019).

In the framework of this invention, cross-linked polyethylene is a high-density polyethylene containing cross-linked bonds in its polymer structure.

PE-RT grades of polyethylene are known. The polyethylenes with increased thermal resistance that can be used in the pipe according to the invention are marketed in particular by Dow Chemical (Dowlex 2377, Dowlex 2388, Dowlex 2344, DGDA-2399), by Total Petrochemical (XSene XRT70), by Chevron Phillips (Marlex HP076, HHM4903), by Exxon Mobil (HD6704), by Lyondellbasell (Hostalen 4731 B) and by LG Chem Ltd (Lucene mLL SP980).

In the framework of this invention, PE-RT polyethylenes are defined as polyethylenes preferably having a density (according to ASTM D1505-18 revised in 2018 or ISO 1183-2 revised in 2019) between 930 kg/m ³ and 965 kg/m ³ , preferably between 935 kg/m ³ and 960 kg/m ³ and even more preferentially between 940 kg/m ³ and 955 kg/m ³,
a melt flow index (according to ASTM D1238-23, revised in 2023 or ISO 1133-1 revised in 2022) measured at 190 °C under a mass of 2.16kg of between 0.1 g / 10 minutes and 15 g / 10 minutes, preferentially between 0.1 g/10 minutes and 5 g/10 minutes and even more preferably between 0.1 g/10 minutes and 1.5 g/10 minutes,
a tensile yield strength (according to ASTM D638-14 revised in 2014 or ISO 527-2 revised in 2012) of between 15 and 35 MPa, preferably between 20 and 30 MPa and even more preferentially between 25 and 30 MPa,
an elongation at break (according to ASTM D638-14 revised in 2014 or ISO 527-2 revised in 2012) at least greater than 50%, preferably greater than 300% and still more preferably greater than or equal to 500%.

Preferably, polyethylene polymers with a density according to ASTM D1505-18 at 23 °C of at least about 933 kg/m³, more preferably about 935 kg/m³, most preferably about 938 kg/m³ are used as the main component in the first layer.

Preferably, the polyethylene polymer has a density not higher than 943 kg/m³. Preferably, the polyethylene polymer to be used as main component in the first layer has a melt mass flow rate (MFR) (190 °C/2.16 kg) between 0.2 and 1.2g/10 min, preferably 0,6 g/10 min according to ASTM D1238-23.

Examples of such a polyethylene polymer are Lucene mLL SP980 and Dowlex 2388.

### Functionalized polyethylene

In the first layer, one or more polyethylenes that are the main component of the first layer are mixed with at least one functionalized polyethylene. A functionalized polyethylene as defined herein is a polyethylene having functional groups. Suitable functionalized polyethylenes are those describe in e.g. WO2019233949A1: According to WO2019233949A1, a non-functionalized polyethylene can be functionalized to obtain the functionalized polyethylene. Functional groups can be introduced onto the polyethylene in many ways. A great many preparation methods and examples of this functionalized polyethylene are described, for instance, in US4174358. Several of these functionalized polyethylenes are commercially available under different names. Examples of suitable compounds for providing the functional group in the functionalized polyethylene include an unsaturated dicarboxylic anhydride or an unsaturated dicarboxylic acid or an ester thereof, for instance maleic anhydride, itaconic acid and itaconic anhydride, fumaric acid and maleic acid or a glycidyl acrylate, for instance glycidyl methacrylate, and vinyl alkoxysilane. The functional groups are highly reactive relative to, inter alia, amino end groups and acid end groups in polyamides and hydroxylic groups in EVOH. The amount of functional groups in the functionalized polyethylene can vary, but typically less than 2 wt% of a compound used to add functional groups to the polyethylene polymer is added to the polyethylene polymer, relative to the total weight of the polyethylene polymer and the compound used to functionalize the polyethylene polymer. The functionalization reaction can e.g. be carried out via reactive extrusion.

The melt mass flow rate (MFR) of the functionalized polyethylene typically has a value between 1.5 and 11 g/10min measured at 190 °C and 2.16 kg according to ISO 1133-1:2022, and preferably lies between 4 and 8 g/10 min ( measured under the same conditions). The density of the functionalized polyethylene typically has a value between 920 and 960 kg/m³ according to ISO 1183-1:2019 method A.

The melting point of the functionalized polyethylene typically has a value between 115 and 145 °C, determined according to ISO 11357-1:2023 / ISO 11357-3:2018, with a heating rate of 10 °C/minute.

Suitable functionalized polyethylene to be used in the first layer are e.g. polymers provided by YPAREX B.V. in The Netherlands, such as Yparex 10403, a LLDPE grafted with maleic anhydride, or Yparex 0H29, a HDPE grafted with maleic anhydride.

The amount of functionalized polyolefin in the polyethylene polymer used as the main component is for example between 1 and 10 wt%, more preferably between 2 and 5 wt%, and even more preferably between 3 and 4 wt%. whereby the wt% is relative to the total weight of polyethylene polymer and the functionalized polyethylene polymer.

The first layer may comprise additives such as stabilizers, antioxidants, UV-absorbers and colorants. The amount of additives is typically less than 5% by weight (wt%), relative to the total weight of the first layer. Preferably, the amount of additive is less than 3 wt%, most preferably less than 1 wt%.

Commercial grades of polyethylene polymers are sometimes sold comprising additives. Preferably the first layer comprises only additives already present in the polyethylene polymers used, more preferably the first layer comprises no additives.

Additives often used in the first layer, either as part of the commercial grade of polyethylene used and/or of the commercial grade of functionalized polyethylene used or by separate addition to the composition of the first layer, are Pentaerythritol tetrakis(3-(3,5-di-t-butyl-4-hydroxyphenyl)propionate (CAS 6683-19-8), Octadecyl 3,5-bis (1,1-dimethylethyl)-4-hydroxybenzene propionate (CAS 2082-79-3), Tris (2,4-di-t-butylphenyl) phosphite (CAS 31570-04-4), 1,3,5-Trimethyl-2,4,6-tris (3,5-di-t-butyl-4-hydroxybenzyl) benzene (CAS 1709-70-2).

The main component and any further components in the first layer are mixed, typically by mixing the granules of the polyethylene polymer with one or more further components before melting, e.g. the mixing may be done before extrusion or as part of the pipe extrusion process, for example using a gravimetric mixing unit.

In the framework of this invention, a component is the main component of a layer if it is the component in that layer that is present in the biggest amount of all components present in that layer.

If a mixture of polyethylenes is used in the first layer, the total amount of all polyethylenes excluding any functionalized polyethylenes is taken together and forms the amount of the main component.

The thickness of the first layer may vary. The thickness will be chosen in accordance with the desired inner- and outer diameter of the pipe, as well as the thickness of the other layers present in the pipe. For example, for a pipe with an inner diameter of 12 mm and outer diameter of 16 mm, the first layer may be between 800 and 1400 micrometer thick.

In the framework of this invention, the inner diameter of the pipe is defined as the inner diameter of the innermost layer of a multilayer pipe.

In the framework of this invention, the outer diameter of the pipe is defined as the diameter of the outside of the outermost layer of the pipe.

Typically, the inner diameter of the pipe will be the inner diameter of the first layer. However, as a further layer can be present, which further layer is surrounded by the first layer, the inner diameter of the pipe can be smaller than the inner diameter of the first layer. In the same way, since one or more further layers can be present on the outside of the fifth layer, the outer diameter of the pipe may be larger than the outer diameter of the fifth layer.

### Second layer

Suitable polymers to be used in the second layer may be aliphatic polyamides, semi-aromatic polyamides or an aromatic polyamides, or a blend thereof. For example, the polyamides PA 6, PA 46, PA 66, PA 11, PA 12, PA 6T/66, PA 6T/6I, PA 6I/6T, PA 6/6T, PA 6/66, PA 8T, PA 9T, PA 12T, PA 69, PA 610, PA 612, PA 1012, PA 1212, PA MACM12, PA PACM12, PA MACMT, PA PACP12, PA NDT, PA MXDI, PA Nl, PA NT, PA TMHMDAT, PA 12/PACMT/PACMI, PA 12/MACMI/MACMT, PA N12, PA 6/MACMI or blends thereof are suitable. Preferably, the polyamide is selected from the group consisting of polyamide-6, polyamide-6,6, polyamide-6,66, polyamide-4,6 and mixtures thereof. More preferably, the polyamide is polyamide-6. Even more preferably, the polyamide is polyamide-6 having a viscosity number higher than 160 cm³/g, preferably higher than 180 cm³/g, and lower than 260 cm³/g, preferably lower than 240 cm³/g. The viscosity number is measured according to ISO 307:2019 and determined using a solution of 0.5 gram of polyamide-6 in 100 ml of 90 wt% strength formic acid at 25,00 degrees centigrade. An example of suitable polyamide is Akulon F132-E1 from DSM with a viscosity number (VN) in formic acid (0.5 g/100 ml) of 210 cm³/g.

The second layer is substantially free of any compatibilizer, and preferably consists essentially of polyamide. The second layer may comprise more than 95 wt%, preferably 99 wt%, more preferably, 99.9 wt% and most preferably 100wt% polyamide, wherein the wt% are relative to the total weight of the polyamide layer. In the framework of this invention, a compatibilizer is defined as a polyolefin polymer comprising functional groups, more particularly polyethylene polymers comprising functional groups, such as grafted polyethylenes.

Preferably, the second layer is substantially free of any compatibilizer, in particular functionalized polyolefin polymers, more in particular functionalized polyethylene. Preferably the second layer comprises no functionalized polyethylene.

Herein the term functionalized polyethylene is as described above for the first layer. A functionalized polyolefin is defined as a polyolefin functionalized in the same way as described for the functionalized polyethylene.

Before using the polyamide in an extrusion process to create a multilayer pipe, it is preferably dried.

The polyamide used in the second layer, preferably has a moisture content <0.07 wt%, relative to the amount of polyamide. The polyamide may be delivered dry and ready-to-use, but it also possible to (re-)dry the polyamide. After drying, and before using the polyamide in an extrusion process to create a multilayer pipe, it is preferably dried to a moisture content of content <0,07wt%, relative to the amount polyamide.

Drying of the PA can e.g. be done in a dehumidified hopper dryer at e.g approximately 75 °C before processing. The dryer may be a regenerative, desiccant bed type with an exit air dew point monitor. Recommended dewpoint is -25 to -40 °C. Experience has shown that a drying time of 8 to 10 hours will usually be enough to give an acceptable moisture level. Avoid drying temperatures above 80 °C because of possible oxidative damage (for example, yellowing). During processing, care should also be taken to limit the uptake of moisture from the air.

In addition to the one or more polyamide polymers, the second layer may comprise additives such as stabilizers, antioxidants, UV absorbers and colorants.

The thickness of the second layer may vary. The thickness will be chosen in accordance with the desired inner- and outer diameter of the pipe, as well as the thickness of the other layers present in the pipe. For example, for a pipe with an inner diameter of 12 mm and outer diameter of 16 mm, the second layer may for example be between 50-150 micrometer, preferably, between 80 and 120 micrometer thick.

### The third layer

Suitable polymers to be used as main component in the third layer are polyketones. The polyketones may be used singly, or two or more thereof may be used. Suitable polyketones are known and described in e.g. EP 3 392 035 A1, paragraphs [0017] - |0026]. This patent describes examples of the polyketones, including e.g. a linear polymer comprising: a carbonyl group (CO); and a divalent organic group derived from an ethylenically unsaturated compound or a divalent organic group obtained by connecting two or more divalent organic groups derived from an ethylenically unsaturated compound, with the carbonyl group and the divalent organic group being alternately connected, and the linear polymer is usually represented by formula (1):

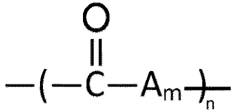

In formula (1), A represents a divalent organic group derived from an ethylenically unsaturated compound, m represents 1 to 6, n represents an integer of 2 or more, preferably an integer of 2 to 6000. Such a polyketone is usually a polymer obtained by polymerizing carbon monoxide and an ethylenically unsaturated compound, wherein examples of the ethylenically unsaturated compound include: α-olefins having 2 to 12 carbon atoms such as ethylene, propylene, 1-butene, isobutylene, and 1-pentene, preferably straight-chain α-olefins having 2 to 6 carbon atoms, more preferably ethylene alone, or ethylene and propylene; dienes or halides thereof such as butadiene, isoprene, and 2-chlorobutadiene-1,3; vinylidenes or halides thereof such as vinylidene chloride; vinyl esters or halides thereof such as vinyl acetate, vinyl chloroacetate, vinyl dimethylacetate, and vinyl trimethylacetate; halogenated vinyl such as tetrafluoroethylene and chloroethylene; vinyl acetals such as ketene methyl(vinyl)acetal; vinyl ketones such as vinyl methyl ketone and vinyl ethyl ketone; styrenes or derivatives thereof such as styrene, chlorostyrene, and α-methylstyrene; acrylic acid and methacrylic acid, and ester compounds, amide compounds, nitrile compounds, and acid halides derived therefrom; and vinyl esters of unsaturated carboxylic acids, such as vinyl hexenoate and vinyl crotonate.

Among these, straight-chain α-olefins having 2 to 6 carbon atoms are preferable as the ethylenically unsaturated compound, and the ethylenically unsaturated compound particularly preferably contains ethylene alone, or ethylene and propylene. Accordingly, as the polyketone, an ethylene/carbon monoxide copolymer and an ethylene/propylene/carbon monoxide copolymer are preferable.

The ethylenically unsaturated compounds may be used singly, or two or more thereof may be used. In the latter case, ethylene and a straight-chain α-olefin having 3 to 6 carbon atoms or propylene in particular are preferably used in combination. In this case, a molar ratio of ethylene/the straight chain α-olefin having 3 to 6 carbon atoms is preferably larger than 1, more preferably 2 to 30.

Preferably, the polyketone used in the third layer has a melting point is between 160 to 240 °C, preferably 180 to 220 °C, and the intrinsic viscosity number (IV) measured in m-cresol with a standard capillary viscosity measuring apparatus is usually 0.5 to 10 dl/g, preferably 0.8 to 4 dl/g.

U.S. Patent No. 4,880,903 also describes suitable polyketones and a process for their manufacture.

Further suitable polyketones are described in e.g. EP3216818 and US5952066A.

In US5952066 A, various types of polyketones are disclosed, such as for example, aliphatic polyketone co- and terpolymers that are semi-crystalline thermoplastics having a high melting point and good strength, toughness, and impact strength. The simplest polyketone described is the alternating copolymer of ethylene and carbon monoxide but introduction of a second olefinic monomer into the polymerization, such as propylene, which will substitute randomly for ethylene, and in alternation with carbon monoxide, to produce the terpolymer poly(ethylene-alt-carbon monoxide)-stat-(propylene-alt-carbon monoxide) (hereinafter E/P/CO terpolymer) is also described.

The termonomer modifies the melting point and crystallinity of the polymer in order to broaden the melt processing window and further improve the resilience and ductility of the polymer.

E/P/CO is just one example of a terpolymer, there being many other possible terpolymers with varying properties. US5952066 A also discloses that at room temperature and in dry conditions, the oxygen permeability coefficients of aliphatic polyketones are among the lowest of conventional polymeric materials. However, as the moisture content is increased, the oxygen barrier of standard aliphatic polyketones is diminished.

In general, the melting point of polyketones used in the third layer is between 180 °C and 240 °C. The melting point of polyketones can be influenced by the types and amounts of the starting monomers used in the production of the polyketones. For example, for aliphatic polyketones the melting point can be adjusted by selecting the types and composition ratios of carbon monoxide and ethylene and other monomers, and the polymerization composition ratio of carbon monoxide, ethylene and propylene.

The melting point of aliphatic polyketone is preferably 180 °C or higher and 220 °C or lower, more preferably 190 °C or higher and 210 °C or lower, from the viewpoint of sufficiently ensuring heat resistance and melt processing stability. The melting point is measured according to ISO 11357-1:2023 / ISO 11357-3:2018, with a heating rate of 10°C/minute. The sample is heated to a temperature higher than the expected melting point using a differential scanning calorimeter, and then the sample is cooled at a rate of 10 °C/minute and cooled to 30 °C. The melting point is defined as the temperature of the peak value of the melting curve measured by leaving the sample as it is for about 1 minute and then increasing the temperature at a rate of 10 °C/minute.

The melt flow rate (MFR) of the aliphatic polyketone (D) (melting point + 20 °C under 2.16kg load) ensures a desirable moldability by setting the viscosity at the time of melting within an appropriate range, and does not excessively lower the melt tension. From the viewpoint of preventing the occurrence of problems such as drawdown during molding, it is preferably from 0.01 g/10 min to 50 g/10 min, and preferably from 0.1 g/10 min to 10 g/10 min. More preferred 3 g/10 min. all measured at 220 °C 2.16kg according to ISO1133-1:2022.

The moisture-content has an effect on the properties of the polyketone used in the third layer. The moisture content may vary but is typically recommended to be below 0.2 wt% before extrusion , relative to the total weight of the polyketone. Satisfactory product drying can usually be obtained using conditions that range from 2 hours at 90 °C to overnight at 60 °C. Recommended drying condition is 3-4 hours at 80 °C.

Examples of commercially available polyketones are the polyketones sold under the tradename "Poketone" provided by Hyosung.

The third layer can also contain various additives as required. Examples of such additives include, antioxidants, thermal stabilizers, UV absorbers, light stabilizers. Additives often used in the first layer are Pentaerythritol tetrakis(3-(3,5-di-t-butyl-4-hydroxyphenyl)propionate (CAS 6683-19-8), Octadecyl 3,5-bis (1,1-dimethylethyl)-4-hydroxybenzene propionate (CAS 2082-79-3), Tris (2,4-di-t-butylphenyl) phosphite (CAS 31570-04-4), 1,3,5-Trimethyl-2,4,6-tris (3,5-di-t-butyl-4-hydroxybenzyl) benzene (CAS 1709-70-2).

A skilled person can easily determine the types and amounts of additives needed to meet the requirements of pipes used for water transport, in particular for underfloor heating.

The third layer may comprise a certain amount of a further polymer or polymers. For example, a blend of polyketone with e.g EVOH is possible. The amount of such further polymer in the third layer may for example range between 5 and 25 wt% (relative to the total weight of all the components present in the third layer). The thickness of the third layer may vary. The thickness will be chosen in accordance with the desired inner- and outer diameter of the pipe, as well as the thickness of the other layers present in the pipe. For example, for a pipe with an inner diameter of 12 mm and an outer diameter of 16 mm, the third layer may for example be between 150-250 micrometer, preferably the third layer is at least 150 micrometer thick.

### The Fourth Layer

Suitable polymers and optional further components for the fourth layer are the same as described above for the second layer. The polyamide polymers in the second and fourth layer may be the same or different. Preferably, the polyamide polymers used in the second and the fourth layer are the same.

Also the fourth layer is substantially free of any compatibilizer, and preferably consists essentially of polyamide, although additives other than compatibilizers may be present, as described for the second layer.

The thickness of the fourth layer may vary. The thickness will be chosen in accordance with the desired inner- and outer diameter of the pipe, as well as the thickness of the other layers present in the pipe. For example, for a pipe with an inner diameter of 12 mm and and outer diameter of 16 mm, the fourth layer may for example be between 120 -180 micrometer thick.

### The Fifth layer

Suitable components for the fifth layer are the same as described above as suitable components for the first layer. The components in the first and fifth layer may be the same or different. Preferably, the components used in the first and the fifth layer are the same.

The thickness of the fifth layer may vary. The thickness will be chosen in accordance with the desired inner- and outer diameter of the pipe, as well as the thickness of the other layers present in the pipe. For example, for a pipe with an inner diameter of 12 mm and and outer diameter of 16 mm, the fifth layer may for example be between 350 -700 micrometer thick.

### Pipe properties

A person skilled in the art can adapt the layer thickness so that the desired properties, e.g. the oxygen permeability, are met.

Preferably, the multilayered pipe according to the invention has an oxygen permeability of less than 0.32 mg O₂/m².day according to ISO 17455:2005, DIN 4726 (40 °C, dynamic test method). Additionally, no delamination between the various layers in the pipe should occur.

Multilayer pipes according to the invention may be used e.g. in hot and cold water systems, floor and wall heating/cooling and ceiling cooling. Thus, the invention also relates to the use of a multilayer pipe according to the invention, as part of a heating system or cooling system, preferably an underfloor heating or cooling system, and to a heating or cooling system comprising a multilayer pipe according to the invention.

### Production method

A possible way to produce multilayer pipes according to the invention is via extrusion. Extrusion of multilayered pipes is known, and e.g. described by J.A. Colbert, in "The extrusion of multi-layer barrier tubing from cross linked polyethylene (PEX)" Conference Proceedings Volume I ~ Processing ANTEC2000 May 7 -11, 2000 Orlando, Florida TH8 Extrusion p. 423 and onwards.

A multilayered pipe comprising 5 layers can for example be produced using three extruders for symmetrical pipes, or five extruders for symmetric and asymmetric pipes. The dimension of the extruders is chosen in accordance with the desired thickness of the pipe and the desired thickness of the various layers.

The temperature zones are adjusted in accordance with the melting temperatures of the materials to be extruded. The ratio of the screw length divided by the diameter of the screw is preferably between 15 and 30.

After extrusion, the pipe is calibrated, i.e the pipe is shaped or calibrated to the desired outer diameter.

The person skilled in the art can determine a suitable line speed for the chosen process configuration.

### EXPERIMENTAL

### MATERIALS

- Lucene mLL SP980, a PE-RT type I supplied by LG Chem Ltd, Korea:
   Melt mass flow rate (MFR) (190 °C/2.16kg) 0,60 g/10 min according to ASTM D1238-23
   Density at 23 °C 938 kg/m³ according to ASTM D1505-18
   Melting point 126 °C according to ISO 11357-1:2023 / ISO 11357-3:2018
- Akulon F132-E1, a polyamide-6, pre-dried at 70 °C for 4 hours under vacuum, approx. 250 ppm moisture content, supplied by DSM Engineering materials, The Netherlands:
   Viscosity Number 210 cm³/g according to ISO 307:2019
   Density 1130 kg/m³ according to ISO 1183-1:2019 method A
   Melting point 220 °C according to ISO 11357-1:2023 / ISO 11357-3:2018
- Poketone M710F, supplied by Hyosung, Korea:
   Melt mass flow rate (MFR) (220 °C/2.16kg) 3 g/10 min according to ASTM D1238-23
   Density 1220 kg/m³ according to ASTM D792-20 method A.
   Melting point 197 °C according to ISO 11357-1:2023 / ISO 11357-3:2018
- Yparex 8603 S, a LLDPE grafted with maleic anhydride supplied by Yparex BV, The Netherlands. Yparex 8603 S is a ready to use non dilutable maleic anhydride modified polyolefin.
   Melt mass flow rate (MFR) (190 °C/2.16kg) 2.8 g/10 min according to ISO 1133-1:2022 Density 926 kg/m³ according to ISO 1183-1:2019 method A
   Melting point 124 °C according to ISO 11357-1:2023 / ISO 11357-3:2018
- Yparex 10403, a LLDPE grafted with maleic anhydride supplied by Yparex BV, The Netherlands.
   Melt mass flow rate (MFR) (190 °C/2.16kg) 3 g/10 min according to ISO 1133-1:2022 Density 918 kg/m³ according to ISO 1183-1:2019 method A
   Melting point 115 °C according to ISO 11357-1:2023 / ISO 11357-3:2018
- Yparex 0H29, a HDPE grafted with maleic anhydride supplied by Yparex BV, The Netherlands
   Melt mass flow rate (MFR) (190 °C/2.16kg) 7 g/10 min according to ISO 1133-1:2022 Density 955 kg/m³ according to ISO 1183-1:2019 method A
   Melting point 135 °C according to ISO 11357-1:2023 / ISO 11357-3:2018
- Compound of Yparex 8603 S and Akulon F132-E1 in a ratio of 30 to 70 (w/w). The compound is produced on a 25 mm ICMA twin screw extruder (LID 52), where the raw materials were fed to the hopper, with an output of 18 kg/h, at a screw speed of 275 rpm and a torque of 80 % and at a temperature of the melt of 246 °C. The resulting product is a strand granulate.

### Pipe extrusion

A Chinese JWELL 5-layer pipe line with 3 extruders was used. A large extruder (diameter approx. 8 cm, length approx. 160 cm) for the first and fifth layers, a small side extruder (diameter approx. 4 cm, length approx. 80 cm) for the third layer, and another small side extruder (diameter approx. 4 cm, length approx. 80 cm) for the second and fourth layer. The extruders are equipped with a standard 3-zone single screw, the first zone for melting polymer granulate, the second and third for mixing and transport. The thickness of the third layer was adjusted to approx. 150 µm, the thickness of the second and fourth layers was adjusted to approx. 80 µm, the thickness of the first layer was adjusted to approx. 1000 um and the thickness of the fifth layer was adjusted to approx. 740 µm. The inner pipe diameter of the resulting multi-layered pipe is ca. 12 mm, the outer diameter is ca.16 mm. The die diameter was approx. 25 mm. The line speed was around 16 m/min. When used in layer 1 and 5, Yparex was dosed manually at the bottom of the hopper via an opening at the side, in the desired amount relative to the total amount of Yparex and PE-RT. After extrusion the resulting 5-layer pipe was pulled through the calibrator and subsequently through a water bath to cool the pipe.

### Delamination test

The adhesion between the layers of the multi-layered pipe was tested by visual observation after mechanical deformation of the pipe by putting a weight of ca. 80kg on top of an end section of the multilayer pipe. As a result of the weight, the pipe end flattened somewhat. The flattened end of the pipe was inspected visually for delamination between the layers.

### Oxygen permeability tests

Oxygen permeability of experiment 4 was tested according to ISO 17455:2005 and DIN 4726-2017.

For DIN 4726:2017, the following pre-conditioning was used:

### Bending pre-conditioning (1)

| | |
|---|---|
| Bending diameter : | 8 x dₙ (applied on 10% of the assembly length) |
| Environment : | Air in air |
| Conditioning temperature : | (23 ± 2) °C |
| Conditioning time : | 24 h |

### Water pre-conditioning (2)

| | |
|---|---|
| Environment : | Water in water |
| Water temperature : | (20 ± 1) °C |
| Conditioning time : | 24 h |

### Drying pre-conditioning (3)

| | |
|---|---|
| Environment : | Water in air |
| Air conditions : | (23 ± 2 °C, 50 ± 5% humidity) |
| Conditioning time : | 28 days |

For ISO 17544, the following test parameters were used:

### Test parameters

| | |
|---|---|
| Used method (ISO 17455) : | Dynamic test method (method I) |
| Test temperature : | (40 ± 0,5) °C |
| Conditioning period : | 1 h (eₘᵢₙ < 3 mm) |
| Number of test assemblies : | 1 |
| Length of pipe (assembly) : | (20 ± 0,5) m |
| Number of fittings in assembly : | None |
| Free pipe length of assembly : | (20 ± 0,5) m |
| Internal diameter of the pipe : | 12.1 mm |
| External diameter of the pipe : | 16.3 mm |
| Oxygen detection limit : | 0.1 µg O₂/l |
| Test run O₂ measuring time : | 1 h + 5 h |

### Examples

A number of 5-layered pipes comprising the materials as indicated in Table 1 was produced according to the procedure described above. CE= Comparative Experiment; Ex= Example.

**Table 1: Materials used in multilayer pipes**

| Experiment | Layer 5 | Layer 4 | Layer 3 | Layer 2 | Layer 1 |
|---|---|---|---|---|---|
| CE 1 | Lucene mLL SP980 | Yparex 8603 S | Poketone M710F | Yparex 8603 S | Lucene mLL SP980 |
| CE2 | Lucene mLL SP980 | 30 wt% Yparex 8603 S / 70 wt% Akulon F132-E1 | Poketone M710F | 30 wt% Yparex 8603 S / 70 wt% Akulon F132-E1 | Lucene mLL SP980 |
| EX 3 | 90 wt% Lucene mLL SP980 + 10 wt % Yparex 10403 | Akulon F132-E1 | Poketone M710F | Akulon F132-E1 | 90 wt% Lucene mLL SP980 + 10 wt% Yparex 10403 |
| EX 4 | 96,7 wt% Lucene mLL SP980 + 3.3 wt% Yparex 0H29 | Akulon F132-E1 | Poketone M710F | Akulon F132-E1 | 96,7 wt% Lucene mLL SP980 + 3.3 wt% Yparex 0H29 |

### Adhesion properties

The adhesion between the layers of the multilayer pipe was judged by visual observation after mechanical deformation of the pipe as described above.

Table 2 shows the results.

**Table 2: Delamination-test results**

| Pipe | Adhesion layer 1 and 2 | Adhesion layer 2 and 3 | Adhesion layer 3 and 4 | Adhesion layer 4 and 5 |
|---|---|---|---|---|
| CE 1 | | delamination | delamination | |
| CE2 | | delamination | delamination | |
| Ex 3 | No delamination | No delamination | No delamination | No delamination |
| EX 4 | No delamination | No delamination | No delamination | No delamination |

For comparative experiment 1 and 2 (CE1 and CE2) delamination took place between the second and the third layer and the third and the fourth layer. Experiment 3 and 4 (Ex3 and Ex4) did not show delamination.

### Measurement of barrier properties at KIWA

The oxygen barrier property of the pipe with a composition according to Example 4 was measured in duplicate according to ISO 17455:2005 and DIN 4726-2017. The oxygen permeability was 0.20 mg O2/(m².day) at 40 °C dynamic method for both measurements.

### Layer thickness

The thickness of the extruded layers was determined by microscopy. Cuts of the tubing were made with a Reichert-Jung polycut E. Photographs were taken with an Olympus Vanox-S AH2 microscope.

The average layer thicknesses as measured by microscopy for the pipe of Example 4 were:
Layer 1: 1083 µm
Layer 2: 112 µm
Layer 3: 170 µm
Layer 4: 150 µm
Layer 5: 526 µm

## Claims

1. A multilayer polymer pipe comprising
- a first tubular layer (1), said first layer comprising as main component one or more polyethylene polymers and which layer further comprises at least one functionalized polyethylene polymer
- a second layer (2) surrounding the first layer, said second layer consisting essentially of one or more polyamide polymers
- a third layer (3) surrounding the second layer, said third layer comprising one or more polyketone polymers
- a fourth layer (4) surrounding the third layer, said fourth layer consisting essentially of one or more polyamide polymers
- a fifth layer (5) surrounding the fourth layer, said fifth layer comprising as main component one or more polyethylene polymers and which further comprises at least one functionalized polyethylene polymer

2. The pipe according to claim 1, wherein the polyethylene polymer in the first layer has a density measured according to ASTM D1505-18 at 23 °C, of between 933 - 943 kg/m³.

3. The pipe according to claim 1 or 2, wherein the polyethylene polymer of the fifth layer has a density measured according to ASTM D1505-18 at 23 °C, of between 933 - 943 kg/m³.

4. The pipe according to any one of claims 1-3, wherein the functionalized polyethylene polymer in the first layer is a maleic anhydride modified polyethylene polymer

5. The pipe according to any one of claims 1-4, wherein the functionalized polyethylene polymer in the fifth layer is a maleic anhydride modified polyethylene polymer.

6. The pipe according to any one of claims 1-5, wherein the polyketone has a melt mass flow rate (MFR) of between 2-4 g/10 min when measured according to ASTM 1238-23 at 220 °C and 2.16kg.

7. The pipe according to any one of claims 1-6, wherein the second layer consists essentially of a polyamide 6 polymer.

8. The pipe according to any one of claims 1-7, wherein the fourth layer consists essentially of a polyamide 6 polymer.

9. The pipe according to any of the preceding claims, wherein the first and/or the fifth layer are each independently a PE-RT type polyethylene polymer

10. The pipe according to any of the preceding claims, wherein the first and/or the fifth layer are each independently a crosslinked polyethylene polymer

11. The pipe according to any of the preceding claims, wherein the amount of functionalized polyethylene in the first layer and/or the fifth layer is between 1wt% and 10wt%, relative to the total weight if the polyethylene polymer and the functionalized polyethylene polymer.

12. The pipe according to any of the preceding claims, wherein the pipe has an oxygen permeability of less than 0,32 mg O₂/(m².day) at 40 °C with dynamic method according to ISO17455:2005.

13. The pipe according to any of the preceding claims, wherein the pipe comprises one or more additional layers surrounding the fifth layer.

14. The pipe according to any of the preceding claims, wherein the pipe comprises additional layers surrounded by the first layer, and optionally a further layer surrounded by such additional layer.

15. Use of a multilayer pipe according to any one of claims 1 -14 as part of a heating system or cooling system, preferably an underfloor heating or cooling system.
